# EUROPEAN PATENT SPECIFICATION

(11) **EP 4 417 401 B1**
(45) Date of publication and mention of the grant of the patent: **08.07.2026**
(21) Application number: 23275021.6
(22) Date of filing: 14.02.2023
(51) Int. Cl.: B29C 70/54, B29C 70/22, B29C 70/32, B29C 70/86

(54) **BRAIDED COMPOSITE STRUCTURE AND METHOD FOR ITS MANUFACTURE**
GEFLOCHTENE VERBUNDSTRUKTUR UND VERFAHREN ZU IHRER HERSTELLUNG
STRUCTURE COMPOSITE TRESSEE ET PROCEDE DE FABRICATION

(43) Date of publication of application: 21.08.2024
(73) Proprietor: Crompton Technology Group Limited, Oxfordshire, OX16 4XD (GB)
(72) Inventor: BEALE, Thomas Charles, Faringdon SN7 7UW (GB); BERNARD, James William, Banbury OX15 5RT (GB); FINNEY, Robert Edwin, Chipping Norton OX7 3SB (GB)
(74) Representative: Casalonga

(56) References cited:
- WO-A1-2017/008899
- DE-A1- 102018 106 925
- GB-A- 2 207 115
- US-A1- 2012 305 173
- SUN XIAOCHUAN ET AL: "Experimental and numerical studies on the braiding of carbon fibres over structured end-fittings for the design and manufacture of high performance hybrid shafts", PRODUCTION ENGINEERING, CARL HANSER VERLAG, DE, vol. 12, no. 2, 26 April 2018 (2018-04-26), pages 215 - 228, XP036498218, ISSN: 0944-6524, [retrieved on 20180426], DOI: 10.1007/S11740-018-0824-1

## Description

### Technical Field

This disclosure relates to a composite structure manufactured using fibre braiding. The disclosure also relates to arranging a braiding machine and a mandrel to manufacture a composite structure using fibre braiding. In particular, the disclosure may be applicable to a method of forming a fibre braided composite structure with holes in it.

### Background Art

Composite materials such as carbon fibre present a number of advantages over traditional materials such as metals. Compared to many other materials, composite materials provide high strength and low weight, making them desirable for use in a wide range of applications. For example, they are particularly suitable for aerospace applications where low weight is advantageous. They may also have improved ability to transfer torque due to fibres extending along the structure, making such materials suitable for use in applications such as drive shafts.

Composite materials may be formed using a number of methods. In some examples in which the composite material comprises fibre and resin, fibres are placed over a mandrel in order to form the desired shape. There are a number of methods used to place fibres over the mandrel, for example fibre braiding, filament winding, and automated fibre placement (AFP). Resin may be added to the fibre either before or after placement (e.g. by drawing through a resin bath, pre-impregnating the fibres, or applying a mould over the fibre and injecting resin into the mould).

In some applications, it is desirable to form holes in the composite structure, for example to form joints and facilitate connections to other components. Holes may be formed after a fibre-reinforced polymer structure has been fully formed and cured, e.g. by drilling or otherwise machining a hole through the formed structure. However, this can reduce the strength of the structure significantly. For example, forming a hole in this way will sever a lot of fibres and thereby reduce the strength of the structure and in particular its ability to transfer forces (e.g. torque). It is therefore desirable to form holes in composite structures without severing the fibres.

Document GB 2 207 115 A which discloses the features of the preamble of claim 1, also describes a braided composite article comprising a matrix material reinforced by at least one layer of braided filaments for transmitting axial load, and defining an aperture in the article, the article including at least one layer of auxiliary filaments in the vicinity of the aperture which are braided with a larger braid angle than that of the load transmitting filaments and which inhibit elongation of the aperture when an axial load is applied thereto.

### Summary of the Disclosure

According to a first aspect of the present disclosure, there is provided a method of manufacturing a composite structure in accordance with claim 1.

If a mandrel including base parts and conical parts is simply passed through a braiding machine without any attention to the setup and arrangement of the machine relative to the mandrel, there is a significant likelihood that at least some fibres will be laid onto the vertex of the cone. This causes problems as it can cause the fibres to break or at least to be laid with improper tension as they catch on the vertex of the cone. Such problems cause the finished part to be weaker, possibly making the part unusable in certain high specification applications. Thus these problems reduce yield and increase cost. The inventors have found that such problems can actually occur frequently and in some cases may actually prevent the braiding process from functioning reliably at all. For some applications, one solution is to run the braiding machine slowly and to move the fibre tows manually away from the vertex of the cone(s) as they are laid. However, this is time and labour intensive and is also not viable in some manufacturing environments. In particular, where other automated machinery is present, this can be a health and safety hazard which requires personnel to remain outside the operational area when the machines are running. The inventors have found that arranging the mandrel and the braiding machine appropriately before commencing the braiding process can result in none of the fibre tows intersecting with the vertex of the conical part throughout the braiding process. This avoids any need for manual adjustment or intervention during the braiding process. This in turn increases the speed at which the composite structure can be manufactured and increases the yield by avoiding weakened parts. This in turn reduces the cost of manufacture.

There are a number of variables that may be adjusted and selected such that during the braiding process none of the fibre tows intersect with a vertex of the conical part of the mandrel. These may include but are not limited to: the height of the conical part of the mandrel; the radius of the mandrel (taking into account any changes of radius along the base part); the angle between the axis of the conical section and the longitudinal axis of the shaft; the inner radius of the guide ring of the braiding machine; the number of fibre carriers; the fibre angle (which may be determined by the rotational speed of the fibre carriers around the braiding axis and the relative speed of the mandrel relative to the braiding machine); and the angular incline and/or tilt of the mandrel relative to the axis of the braiding machine during the braiding process. Any number and combination of these variables may be selected and adjusted as desired. More generally, these features all affect the relative positions of i) the vertex of the (or each) conical part and ii) the fibres, throughout the braiding process. By finding an arrangement in which there will be no intersections at any point throughout the braiding process, the braiding process can be accomplished successfully.

In the above description, the braiding ring may be a torus with its centre coaxial with the axis of the braiding machine. The braiding ring may then have a major radius (being the radius of the centre of the guide ring from the central axis) and a minor radius (being the radius of the ring itself). The inner radius of the braiding ring is then equal to the major radius minus the minor radius.

In some examples it may be sufficient to design the size of the mandrel, including the conical part(s) appropriately and/or to arrange the starting position of the mandrel (including the conical part(s) relative to the braiding machine (and in particular relative to the fibre carriers and/or guide rings of the braiding machine) and then simply let the normal braiding process commence. In other examples, it may be possible to adjust certain variables of the braiding process during the braiding process so as to avoid intersections of the fibres and the vertex of the conical part. For example, small (and temporary) adjustments of the mandrel position (e.g. small rotations around the longitudinal axis or small axial shifts) may be possible so as to avoid an intersection. These adjustments may be reversed after the intersection risk has passed so as to avoid compromising the future fibre placement.

The mandrel may be any suitable and desired type. The two (or more) parts of the mandrel may be formed as a single piece or as separate pieces. If the parts of the mandrel are formed as separate pieces they may be connected together in any suitable way, for example by an adhesive, a connector (e.g. a screw or other removable fixing device) or by mechanical interlocking structures such as grooves.

The (or each) conical part comprises a portion with a sloped outer surface which tapers towards a vertex. The base of the conical part may be any shape, for example it may be circular, square, rectangular or elliptical. Smooth (e.g. circular or elliptical) sloped surfaces are preferred to avoid stressing the fibres over an edge.

The braiding machine may be any suitable and desired type. In some examples, the braiding machine comprises a carrier ring. A plurality of fibre carriers are mounted on and move around the carrier ring during operation. The centre of the carrier ring defines the axis of the braiding machine (the axis passing through the centre of the carrier ring and perpendicular to the carrier ring). The fibre carriers are wound with fibre tows. The fibre tows pass from their respective fibre carrier towards the centre of the braiding machine. The fibre carriers move around the carrier ring in such a way that the fibre tows are interleaved (or woven) with one another to form a braid. For example, the fibre carriers may comprise a clockwise set and an anti-clockwise set which move around the carrier ring in opposite directions, passing over and under each other as they pass. The fibre tows may pass through a guide ring (of smaller diameter than the carrier ring) before reaching the mandrel. The guide ring is an easily adjustable (or replaceable) part, the size of which impacts certain characteristics of the braid. The braiding ring thus facilitates control of the braiding process. The mandrel may be passed substantially through the centre of the braiding machine (and therefore also through the centre of the guide ring) such that the fibre tows come into contact with at least some portions of the mandrel, and the fibre tows are braided onto at least part of the base part of the mandrel.

In some examples, the braiding machine is a triaxial braiding machine. In these examples, the braiding machine may comprise additional bobbins which do not move around the carrier ring. These bobbins may lay fibres onto the mandrel in the direction of the axis of the braiding machine. The axial fibres may be secured by the bi-axial fibres which weave over and under the axial fibres.

The mandrel and braiding machine may move relative to each other in any suitable and desired manner. In some examples, the mandrel may pass through a stationary braiding machine. In other examples, the braiding machine may be moved relative to a stationary mandrel. In some examples, the mandrel is passed through the braiding machine more than once in order to build up layers of fibre tows on the mandrel. The mandrel may be passed in any suitable direction through the braiding machine. In some examples, the mandrel travels substantially along the axis of the braiding machine.

In some examples, an axis of the at least one conical part is substantially perpendicular to an axis of the braiding machine when the mandrel passes through the braiding machine. However, in other examples described further below, the at least one conical part may have an axis at a different angle to the axis of the braiding machine.

The axis of the conical part is defined in a direction from the vertex to the centre of the base of the conical part. The base of the conical part may be where the conical part meets the cylindrical surface of the base part.

The axis of the conical part may be at a non-perpendicular angle to the longitudinal axis of the elongate shaft. That is, the conical part may be angled forwards or backwards from vertical relative to the base part. The angle of the conical part with respect to the longitudinal axis of the elongate shaft may be determined based at least in part upon the desired braiding angle of the bi-axial fibres. For example, for a braiding angle of 45° (which may be suitable for use in a torque shaft), the angle of the conical part may be between 50° and 70° with respect to the longitudinal axis of the elongate shaft. In another example, for a braiding angle of 30° (which may be suitable for use in a strut), the angle of the conical part may be between 30° and 50° with respect to the longitudinal axis of the elongate shaft. In another example, for a braiding angle of 70-85° (which may be suitable for use in a triaxial strut with high axial content), the angle of the conical part may be between 70° and 110°. It will be appreciated that the appropriate angle for the conical part may be determined experimentally or by appropriate calculation based on the particular geometry of the braiding machine and mandrel. Such arrangements can have certain advantages as the angle of the conical part can influence the way that fibre is deposited onto the surface of the base part around the base of the conical part.

As the mandrel moves through the braiding machine, the fibre tows taper from the guide ring down towards the mandrel. As the fibres wrap around the mandrel, the distance between adjacent tows becomes smaller as the braided structure cinches down onto the mandrel. The point at which the fibre tows contact the mandrel is known as the "fell point". Thus the distance between adjacent tows is smaller at or near the fell point than it is at or near the guide ring. The surface that is formed by the braided fibre structure between the fell point and the guide ring is referred to here as the convergence surface. The fibre tows all lie on this convergence surface. It will be appreciated that the shape formed between two adjacent clockwise fibre tows and two adjacent anticlockwise tows is a quadrilateral (with each tow forming one side of the quadrilateral). Near to the fell point, where the fibres land on the mandrel, these quadrilateral shaped spaces are small, or even close to non-existent as the fibre tows can come into contact with each other. Away from the fell point, near to the guide ring, the fibre tows spread out and the quadrilaterals enlarge. As the mandrel moves through the braiding machine, the path of a particular quadrilateral can be traced (or calculated) as it travels from the guide ring to the mandrel (travelling down the convergence surface). If a vertex of a conical part passes through one of these quadrilaterals as it travels towards the mandrel, that quadrilateral will be prevented from shrinking in size by the shape of the conical part. Instead, as that quadrilateral arrives at the mandrel surface, it will be deformed by the conical part to have a size and shape approximately matching (or defined by) the base of the conical part. In this way a hole is formed in the resulting braided fabric.

The angle of the conical part relative to the base part affects how much the conical part will deflect the fibre tows away from their normal path. For minimal deflection of the fibre tows, the conical part may be angled towards the guide ring to match the path that the quadrilateral would take as it progresses towards the fell point. The quadrilateral then essentially simply tightens around the conical part as it shrinks until it is prevented from further shrinkage by the conical part. As the fibre tows continue to progress towards the mandrel, the four fibre tows making up the quadrilateral will then be spread equally by the conical part, enlarging it to make the desired hole.

In other examples, the conical part may be angled at a greater or lesser angle to the longitudinal axis of the elongate shaft. This will affect how the fibre tows are displaced as they slide down the conical part. If the conical part is angled towards the guide ring, but at a shallower angle to the longitudinal axis then the conical part will cause more fibre tows to land on the downstream side of the conical part than on the upstream side (i.e. there will be a greater build up of tows on the side of the conical part furthest from the guide ring) while fewer tows will land on the upstream side of the conical part (i.e. there will be a region depleted of fibre on the side of the conical part nearest to the guide ring). This may be advantageous in certain products where strengthening is required on that side of the hole. One example of such an arrangement may be the formation of a yoke (e.g. a U-shaped support). A yoke may be formed by manufacturing a shaft with two opposite holes as described above and then cutting the shaft perpendicular to its axis through the holes. In such examples, it can be less important if there is a depleted zone of fibre in the region that is cut off, while there is an advantage to having additional reinforcement fibre on the part that remains. The opposite effect can be achieved by angling the conical part at a greater angle to the longitudinal shaft. With this arrangement the conical part will catch and manipulate more fibre tows on its upstream side causing more fibre tows to land on the upstream side of the conical part than on the downstream side (i.e. there will be a greater build up of tows on the side of the conical part nearest to the guide ring) while fewer tows will land on the downstream side of the conical part (i.e. there will be a depleted region of fibre on the side of the conical part furthest from the guide ring). Again, this may be advantageous in some applications where fibre reinforcement is required on this side of the hole.

It will therefore be appreciated that the angle of the conical part relative to the longitudinal axis may be selected according to the desired properties of the final product to achieve a desired balance of fibre on each side of the hole.

The angle which causes minimum deflection of the fibre tows (and therefore a balanced deposit of fibre around the hole / base of the conical part) can be found by determining the point at which the vertex of the conical part breaks through a quadrilateral on the convergence surface and the point on the mandrel at which that quadrilateral would end up (in the absence of the conical part). These two points define the axis of the conical part that will result in balanced fibre deposition around the hole.

In some examples, the mandrel is configured such that fibre tows that come into contact with the at least one conical part of the mandrel slip down to the base of the at least one conical part. This may be advantageous because the fibre tows do not need to be cut to form a hole when the conical part of the mandrel is removed, which may help to increase the strength and torque transmission of the composite structure.

This may be achieved at least in part by minimising a vertex angle of the conical part. The vertex angle is the angle between the axis of the cone and the side of the cone. Minimising the vertex angle reduces the normal force exerted on the fibre tow by the surface of the cone, and allows the fibre tow to slip towards the base of the cone by tension applied by the braiding machine.

Fibre tows come in lots of different sizes. For example, the number of fibres that form the tow can be varied. Also, the shape and the width of the tow may be varied. For example, a bundle of fibres that forms the tow may be approximately circular in cross-section, or the bundle of fibres may be arranged in a flat ribbon shape. In some examples, each of the fibre tows comprises a bundle of at least 500 fibres, optionally at least 1000 fibres, optionally at least 3000 fibres. Some typical fibre tow sizes include 1k, 3k, 12k, 24k (k indicating 1000 fibres). In some examples, the fibre tow may have a width of at least 1 mm, optionally at least 2 mm, optionally at least 3 mm. It will be appreciated, that wider tows can have certain benefits in the end product, but wider tows also introduce more chance that the tow will intersect with the vertex of the conical part. Therefore the techniques of this disclosure become more applicable and more important for wider tows.

Fibre tows that have slipped down to the base of the conical part will deviate around the base of the conical part as they are laid onto the base part of the mandrel. Thus, each fibre is laid on a helical path around the base part of the mandrel, deviates from that path as it passes the conical part (which later forms the hole) and then continues on its original helical path after it has passed the conical part (or hole). Thus the individual fibres do not wrap around the conical part in order to reverse direction along the rest of the mandrel, but rather deviate around it before continuing on the same path that they would have travelled if the conical part were not present. In some examples, the fibre tows continue past the hole without changing axial direction for a distance of at least one hole diameter. This helps to ensure that the fibre tows have sufficient distance to regroup after the diversion around the hole. In this way the hole is spaced along an axis of the base part from any regions in which the fibres change axial direction as part of the braiding process (e.g. around the base part of the mandrel). In some examples, at least some of the fibre tows may continue in an axial direction for at least several hole diameters (e.g. axial fibre tows used during triaxial braiding). In some examples, the fibre tows may continue around the mandrel in a non-axial direction (e.g. a helical direction). In some examples, the fibres continue past the conical part into a turn around zone in which the fibres change axial direction to return along the mandrel. The turn around zone may eventually be cut off, e.g. after application of resin and curing.

The method includes: modelling the positions of the fibre tows and the at least one conical part during the braiding process; and selecting at least one of the size, the shape and the position of the at least one conical part relative to the braiding machine such that none of the fibre tows intersect with a vertex of the at least one conical part during the braiding process. By modelling the positions of the tows in advance, potential intersections between the fibre tows and the at least one conical part can be identified and avoided. In this way, for a given shape of base part with desired hole locations, conical mandrel parts can be designed by modelling the braiding process and adjusting the size, shape and/or position of the conical part(s) to avoid intersections between the fibre tows and the conical vertex(es).

Optionally, (in addition to selecting the size, shape and/or position of the conical part) parameters of the braiding process may be selected such that none of the fibre tows intersect with a vertex of the at least one conical part during the braiding process. For example, the number of fibre carriers, starting positions of fibre carriers (relative to the mandrel), diameter and position of guide ring, etc. may be selected based on the modelling so as to avoid intersections.

It will be appreciated that the size, shape and/or position of the conical parts of the mandrel may have various restrictions such that these parameters can be varied only within a restricted range of values. For example, the conical part may not exceed the radius of the guide ring. In other examples, the positions of the holes will be determined by their end use (e.g. connecting the composite structure to another component), meaning that the range of positions may be very limited or may in fact be absolutely defined (non-variable). The diameters of the holes may also be absolutely defined by the end product. Where the diameter is variable to some extent, the size (height) of the conical part(s) may be limited by the diameter so that a sufficient gradient of sloped cone surface is achieved so as to ensure that fibre slips down onto the base part as it is laid.

The size of the conical part may include at least one of its base dimensions and axial height. In some examples, the axial height of the conical part is maximised in order to decrease the vertex angle of the conical part. This may help to ensure that fibre tows slip to the base of the conical part. However, at the same time, the axial height should also be low enough that it does not otherwise interfere with the braiding process.

In some examples, modelling the position of the fibre tows during the braiding process may comprise modelling the convergence surface. The convergence surface is the three dimensional surface that contains the fibre tows on their paths from the guide ring to the mandrel. When the mandrel axis is aligned with the axis of the braiding machine, the convergence surface may be formed by the surface of revolution of one of the fibre tows around the axis of the mandrel.

In some examples, the method includes: modelling the convergence surface between the guide ring and the fell point; and determining the axial distance between the point at which the vertex of the cone intersects the convergence surface and the fell point.

In some examples, the modelling comprises computer simulation. In some examples, the computer simulation may be configured to test a number of different: braiding set-ups, e.g. number of fibre carriers; fibre angles; and/or guide ring diameters in order to determine a preferred size, shape and/or position for the conical parts(s). Varying these parameters in the simulations will give different convergence surfaces and so will allow interaction with different conical parts to be simulated.

In some examples, the method further comprises the steps of:
applying resin to the fibre tows;
curing the resin;
removing the at least one conical part of the mandrel; and
optionally removing the base part of the mandrel.

The resin may be any suitable and desired type. In some examples the resin may be an epoxy resin. The resin may be applied before braiding (e.g. by using pre-preg fibres or a resin bath) and/or it may be applied after the braiding process (e.g. by resin transfer moulding or vacuum infusion). The resin may be cured using any suitable method (e.g. heating to a high temperature or irradiating with UV light).

The base part of the mandrel may be left in place (e.g. to provide additional strength or due to the shape of the structure making removal difficult). However, in many applications, especially those where weight of the final component is important, the base part of the mandrel may be removed after the resin is cured. The base part of the mandrel may be removed using any suitable and desired technique. In some examples, the mandrel may be pulled out of the composite structure. However, in some examples the shape of the composite structure may prevent the mandrel from being pulled out. Therefore, in some examples the mandrel may be removable in other ways. For example, the base part of the mandrel could be a multi-part mandrel that can be disassembled for removal. In other examples the base part of the mandrel may be a washout mandrel or it may be dissolvable, inflatable or removed using another suitable method.

In some examples, removing the at least one conical part of the mandrel results in at least one hole in the composite structure where the at least one conical part was positioned. The hole may have substantially the same shape and dimensions as the base of the conical part. Any number of conical parts may be used to create the required number of holes in the composite structure.

In some examples, the method includes the steps of providing metallic inserts at or around the base of the at least one conical part, and at least partially encasing the metallic inserts in the resin. The metallic inserts may provide reinforcement around holes of the composite structure. In some examples, the metallic inserts may prevent wear to the hole of the composite structure during subsequent use. The metallic inserts may be provided on the mandrel before resin is applied and cured. This may result in the metallic inserts being secured to the composite structure by the resin. This may be advantageous because it simplifies manufacture of the composite structure by removing the additional step of attaching the metallic inserts to the structure (e.g. by an adhesive). The metallic inserts may be any suitable and desired type. In some examples, the metallic inserts are a material of high hardness, high strength and low weight.

In some examples, the mandrel comprises at least one pair of conical parts, the two conical parts of the pair being positioned on opposite sides of the base part. In some examples, the two conical parts of the pair are substantially coaxial. This is particularly useful for providing holes for a straight shaft or axle or to provide bearings or bushings for rotation of a straight shaft mounted between the two holes formed by the conical parts. However, in some examples the two conical parts of the pair may not share the same axis (e.g. the pair of conical parts may be offset from each other along the axis of the base part).

In some examples, the method further comprises a step of cutting the composite structure such that a part of the composite structure forms a clevis with a pair of holes formed by the pair of conical parts. The cut may be made using any suitable means. In some examples, the cut is made using a cutting machine. In some examples, the cut is made after the resin has been applied and cured, and optionally after the base part of the mandrel has been removed.

In some examples, the clevis is a U-shaped part. In some examples, a pin may be placed through the pair of holes, such that the composite structure may rotate about the pin or another structure mounted on the pin may rotate relative to the composite structure. In some examples, the clevis may be used to connect the composite structure to another component of a system.

In some examples, the mandrel comprises at least two pairs of conical parts, and each pair comprises two conical parts positioned on opposite sides of the base part. In some examples, the conical parts of one pair have a larger base than the conical parts of the other pair.

In some examples, the method further comprises a step of making one or more cuts through the composite structure, wherein the one or more cuts intersect with the two holes created by one pair of conical parts to form a yoke structure on an end of the composite structure. The cut may be made using any suitable means. In some examples, the cut is made using a cutting machine. In some examples, the cut is made after the resin has been applied and cured, and optionally after the base part of the mandrel has been removed. The cut(s) intersecting with the two holes may create a structure with two arms. The two arms may be substantially parallel to one another. The yoke may be used to connect the composite structure to another component, e.g. by means of a pin connected between the two arms of the yoke.

In some examples, the yoke comprises two arms and each arm comprises a hole. The hole may be formed by any suitable means. In some examples, the hole is formed by a cut (e.g. using a cutting machine). In some examples, the hole is made using a drill.

In some examples, the hole in each arm is formed by braiding fibre around at least one conical part of the mandrel as discussed above. For example, in the examples described above where two pairs of conical parts are used to create four holes, one pair of those holes may be used to form (via the cuts described above) a yoke structure with two arms, while the other pair of holes form the holes in each of the two arms.

In some examples, the yoke is configured to form part of a universal joint. In order to form a universal joint, the composite structure must have a means of connection to a cross shaft (e.g. the composite structure must have holes, indents, or a structure to accept the pins of the cross shaft). The shape of the composite structure must also allow the yoke to have at least one degree of freedom for movement and be capable of transferring torque to and from the cross shaft.

The elongate shaft of the base part may have a dimension in one direction that is larger than its dimension in other directions (for example, a length that is larger than its width and depth). The shaft may be any suitable and desired shape. For example, the shaft may have a circular, square, rectangular or elliptical cross-section perpendicular to its longitudinal axis.

In some examples, the composite structure comprises two end portions, and both end portions of the composite structure may be configured to form part of a universal joint. Such a structure may be formed using the processes described above by providing conical mandrel parts appropriately at each end of an elongate shaft shaped mandrel base part. Thus, in some examples, the mandrel comprises at least one conical part provided on each of two axially opposite ends of an elongate shaft base part.

According to a second aspect of the present disclosure, there is provided a composite shaft manufactured by the method of any of the processes described above. The composite shaft may be any suitable and desired shape and dimension. It may include any number of holes at any location on the composite shaft. In some examples, the composite shaft may be suitable for use as a drive shaft. In some examples, the composite shaft may be suitable for use as a drive shaft in an aircraft.

According to a third aspect of the present disclosure, there is provided a braided fibre reinforced polymer shaft, wherein the braided fibre comprises a plurality of braided fibre tows, each tow comprising a plurality of fibres;
wherein the braided fibre reinforced polymer shaft comprises at least one hole formed in the braided fibre;
wherein none of the braided fibre tows are divided by the hole.

It will be appreciated that the braided fibre reinforced polymer shaft discussed here may be formed by the methods discussed above. In particular, when the conical parts are carefully arranged relative to the braiding machine to avoid any intersection of the fibre tows with the vertices of the conical parts, each tow must end up falling completely to one side or the other of the conical part, which in turn results in the fibre tow ending up completely to one side or the other of the hole thus formed. Therefore no fibre tows are split around the hole. It will also be appreciated that as the hole has not been formed by drilling or otherwise machining, no fibre tows are severed (or part severed) by the hole.

Further as discussed above, one or more holes in the shaft may have an imbalance of fibre tows on opposite axial sides of the holes, e.g. with more fibre tows lying on one axial side of the hole than on the axially opposite side. In other examples, the fibre tows may be balanced, i.e. with the same number of fibre tows on each axial side of the hole.

In some examples, there is provided a universal joint comprising a shaft according to the second and/or third aspect of the present disclosure.

According to a fourth aspect of the present disclosure, there is provided computer software comprising instructions, in which, when executed on a processor, cause the processor to:
model the positions of the fibre tows of a braiding machine and at least one conical part on a mandrel that is to be braided by the braiding machine; and
select at least one of the size, shape and position of the at least one conical part relative to the braiding machine such that none of the fibre tows intersect with a vertex of the at least one conical part during the braiding process.

As discussed above, the instructions may cause the processor to perform one or more simulations and to select a simulation that results in no intersections.

### Brief Description of the Drawings

Certain examples of the present disclosure will now be described with reference to the accompanying drawings in which:
Figures 1a-1d are perspective views illustrating a method of manufacturing a composite structure in accordance with an example of the present disclosure;
Figure 2 is a schematic view of a braiding machine in accordance with an example of the present disclosure;
Figure 3 is a side view of a mandrel and a braiding;
Figure 4 is a schematic view of a mandrel and a braiding machine in accordance with an example of the present disclosure;
Figures 5a and 5b illustrate an intersection of a vertex with a fibre tow;
Figure 5c shows a side view of a fibre tow and a conical part;
Figure 5d illustrates the fibre paths in a finished shaft;
Figure 6 is a schematic view of a mandrel and a braiding machine in accordance with an example of the present disclosure;
Figure 7 is a perspective view of a mandrel and a braiding machine, illustrating the pattern of fibre tows;
Figure 8a and 8b are schematic views of composite shafts in accordance with examples of the present disclosure;
Figure 9 is a schematic view of a composite shaft with a yoke formed at each end in accordance with an example of the present disclosure; and
Figure 10 is a flow diagram showing a method of modelling fibre interactions in accordance with an example of the present disclosure.

### Detailed Description

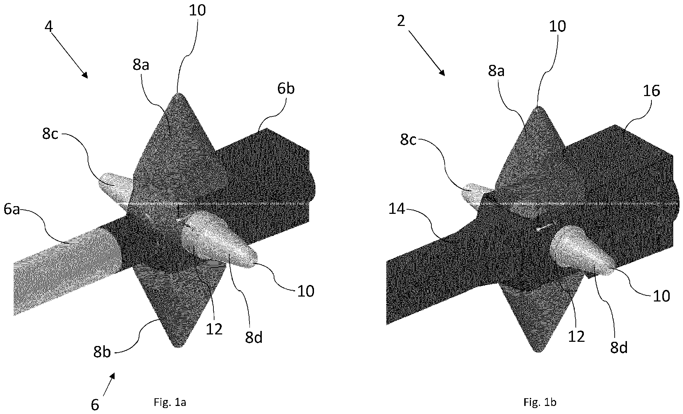

Figures 1a-1d are perspective views illustrating a method of manufacturing a composite structure 2 according to an example of the present disclosure.

Figure 1a shows a mandrel 4 comprising a base part 6a, 6b and a plurality of conical parts 8a-d. In this example, the mandrel 4 comprises two pairs of conical parts, including a first pair 8a, 8b and a second pair 8c, 8d. Each pair comprises two conical parts which are located on opposite sides of the base part 6b. For example, a first conical part 8a is located opposite a second conical part 8b and a third conical part 8c is located opposite a fourth conical part 8d. In this example, the two conical parts of each pair are coaxial, i.e. the first conical part 8a is coaxial with the second conical part 8b and the third conical part 8c is coaxial with the fourth conical part 8d.

In this example, the two conical parts of each pair have the same dimensions, i.e. the first conical part 8a and the second conical part 8b have the same dimensions. Similarly, the third conical part 8c and the fourth conical part 8d have the same dimensions. One of the pairs of conical parts 8a, 8b has a larger base than the other pair of conical parts 8c, 8d. In this example, one of the pairs of conical parts 8a, 8b has a rectangular base and the other pair 8c, 8d has a circular base. However, both are conical in that they have a portion with a sloped outer surface which tapers towards a vertex 10. In the examples shown here the vertices 10 are slightly rounded. While a sharp vertex 10 is generally preferred and may be beneficial for reducing the potential area for intersection with fibres during the braiding process, the vertices 10 will generally need to be somewhat rounded for practical reasons, e.g. for safety and/or for ease of manufacturing and/or installation.

In this example, metallic inserts 12 are provided around the bases of two of the conical parts, i.e. around the bases of the third conical part 8c and the fourth conical part 8d. The metallic inserts 12 are provided before the mandrel 4 passes through the braiding machine (i.e. before braiding occurs) and before resin is applied and cured. Therefore, the metallic inserts 12 are at least partially encased in the resin and secured to the composite structure 2 by the resin when it is cured. The metallic inserts 12 may also be temporarily held in place by the tension in the fibres after the braiding process has completed and before the resin is applied.

In this example, the base part 6 comprises two parts, an elongated cylindrical part 6a with a circular cross section and an elongate cylindrical part 6b with a rectangular cross section. However, in some examples the base part 6 may be one integral part.

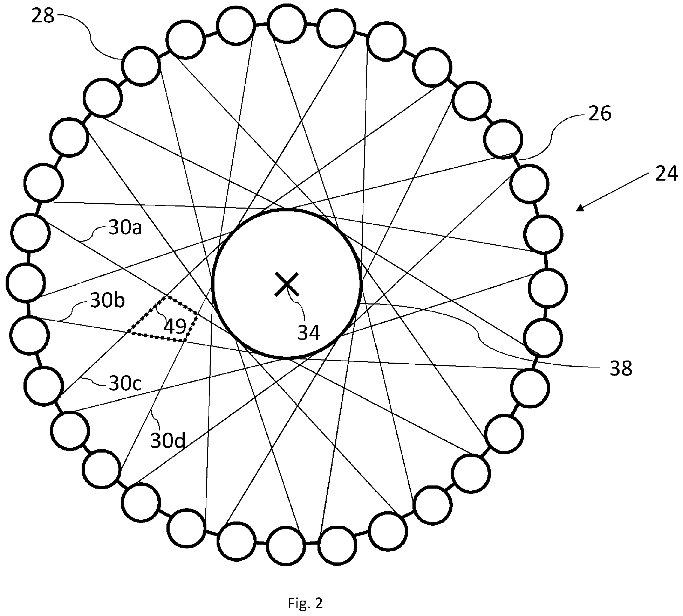

Figure 1b shows the mandrel 4 and composite structure 2 after the mandrel 4 has been through the braiding process. Fibre tows 30 (illustrated in Fig. 2) have been braided onto the base part 6 (both the cylindrical parts 6a and 6b) of the mandrel 4. However, due at least in part to the slope of the conical parts 8a-d, any fibre tows 30 that come into contact with these parts during the braiding process slip down to the bases of the cones. Therefore, no fibre tows 30 are braided onto the conical part 8a-d of the mandrel 4. As can be seen in Figure 1b, the fibre tows 3 in this example have also slipped over the metallic inserts 12 in the same way. After the braiding process, the method may include applying resin to the fibre tows 30 and curing the resin.

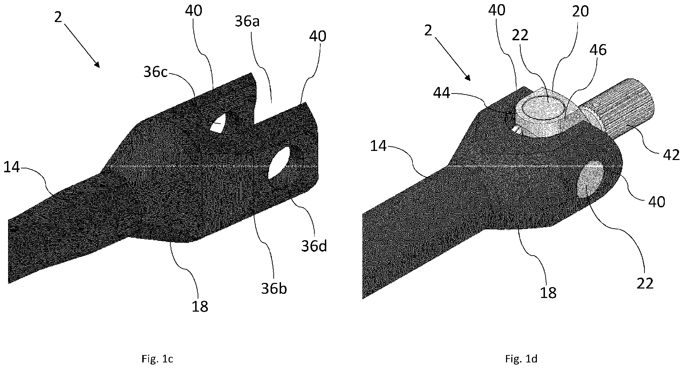

Figure 1c shows the composite structure 2 after the next step in the process (after curing), in which the conical parts 8a-d of the mandrel 4 have been removed. In this example, removing the conical part 8a-d results in four holes 36a-d in the composite structure 2. The holes 36a-d are located where the conical parts 8a-d were positioned. As is shown here, in this example the cylindrical part 6b of the base part 6 of the mandrel 4 has also been removed. The cylindrical part 6a may optionally remain inside the composite structure 2, although for light weight parts, this part 6a is also removed after curing.

In this example, the method includes the further step of cutting the composite structure 2. In this example, the cut intersects with the holes 36a and 36b which were created by one pair of conical parts 8a, 8b (the larger, rectangular based conical parts) and does not intersect with the holes 36c and 36d which were created by the other pair of conical parts 8c, 8d (the smaller, circular based conical parts). As can be seen in Figure 1c, the cut has been made across the end of the larger square-cross-sectioned cylinder of the composite structure (formed over the mandrel base part 6b) and has intersected both holes 36a and 36b, thereby opening those holes at one end so that they form a U-shaped recess in the end of the composite part. Therefore, in this example the end of the composite structure 2 forms a yoke 18. In the example of Figure 1c, the cut that intersects the two holes 36a, 36b is a straight line cut made perpendicular to the axis of the cylindrical part 14 such that the two arms 40 (each containing one of the holes 36c, 36d) is flat at the end.

Figure 1d shows an alternative form of the composite structure 2 which in this example is configured to form part of a universal joint (or cardan joint). In this example, the yoke 18 (comprising the two arms 40) is attached to a cross shaft 20. The cross shaft is a cruciform shape formed from a central hub with four pins 22 extending from the hub at ninety degree intervals. A pair of the pins 22 on the cross shaft 20 are mounted into a pair of holes 36c, 36d in the arms 40 of the yoke 18. The cross shaft 20 comprises another pair of pins 22 that are attachable to a second shaft 42 via holes 44 in another yoke 46 to form a universal joint. This configuration allows torque to be transferred between the two yokes even if the yokes are not coaxial. In Figure 1d, the second yoke 46 is a metal yoke formed at the end of a metal shaft. However, it will be appreciated that this could be an identical structure to the composite yoke 18 shown in Figure 1c such that the cross shaft 20 is connectable to two composite yokes 18 to form a universal joint.

It may also be seen that the arms 40 in Figure 1d have rounded ends rather than flat ends (as in Figure 1c). This is achieved by using a rounded (or curved) cut to intersect with the holes 36a and 36b when cutting the composite structure 2 to form the yoke 18.

Figure 2 is a schematic view of a braiding machine 24. In this example, the braiding machine 24 comprises a carrier ring 26 which carries a plurality of fibre carriers 28. The fibre carriers 28 are mounted to the carrier ring 26 and can move around it during the braiding process. The fibre carriers 28 carry fibre tows 30 which are unwound from the fibre carriers 28 and extend towards the centre of the braiding machine 24. The axis 34 of the braiding machine 24 is shown as a cross at the centre of the carrier ring 26.

The braiding machine 24 also comprises a smaller guide ring 38 that is coaxial with the larger carrier ring 26. The guide ring 38 is configured to deflect the fibre tows 30 towards the mandrel 4 as it passes through the braiding machine 24.

The fibre carriers 28 move around the carrier ring 26. Adjacent fibre carriers 28 move in opposite directions (i.e. clockwise and anticlockwise) around the carrier ring 26 in known manner. As the fibre carriers 28 move circumferentially around the carrier ring 26, they also move radially in and out such that they can pass over and under each other, thereby braiding the fibre tows 30 together.

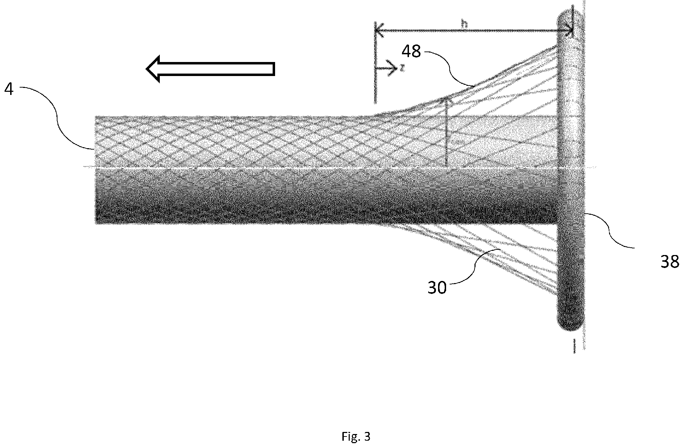

Figure 3 shows a mandrel 4 and a braiding machine 24. In this figure, the guide ring 38, fibre tows 30 and mandrel 4 are viewed from the side (i.e. viewing along the plane of the guide ring). In this example, the mandrel 4 is travelling from the righthand side of the figure towards the left-hand side, as indicated by the arrow.

The fibre tows 30 are directed from the guide ring 38 to the surface of the mandrel 4 during the braiding process. The surface formed by the envelope of the fibre tows 30 (or by revolving one of the fibre tows 30 around the axis of the mandrel 4) is referred to as the convergence surface 48.As can be seen in the figure, the cross section of the convergence surface 48 is a curve. Figure 3 also illustrates how the woven fibre tows 30 form quadrilateral spaces between adjacent fibre tows 30. For example, two adjacent clockwise fibre tows 30a, 30b and two adjacent anticlockwise fibre tows 30c, 30d surround a quadrilateral 49. It can also be seen here that the quadrilaterals are larger nearer the guide ring, but get smaller as they approach the surface of the mandrel 4, i.e. as the braided fabric tightens around the mandrel 4.

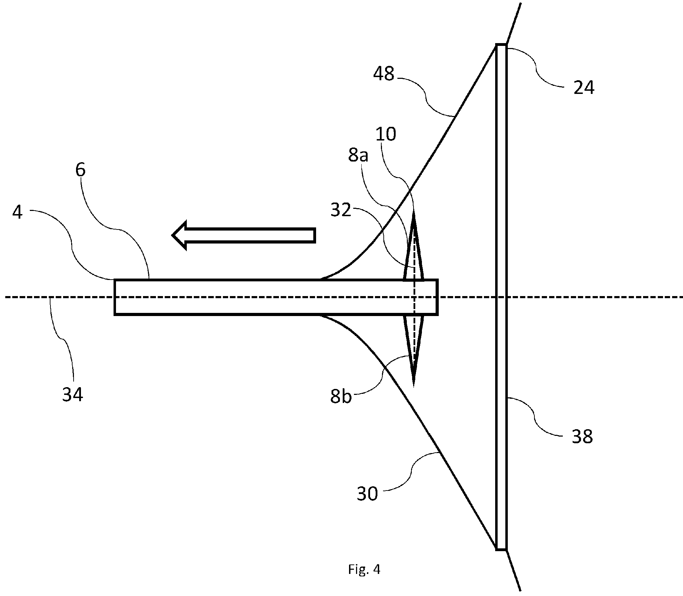

Figure 4 is a schematic view of a mandrel 4 and a braiding machine 24 according to an example of the present disclosure. The braiding machine 24 and mandrel 4 are shown in a side-view cross-section.

In this example, the mandrel 4 comprises two substantially coaxial conical parts 8a and 8b. In this example, the axis 32 of the conical parts 8a, 8b is substantially perpendicular to the axis 34 of the braiding machine 24. In this example, the base part 6 of the mandrel 4 is substantially coaxial with the axis 34 of the braiding machine 24.

During the braiding process, the mandrel 4 is passed repeatedly through the braiding machine 24. The mandrel 4 travels substantially in the direction of the axis 34 of the braiding machine 24. The mandrel 4 and/or braiding machine 24 may travel in either direction, but in this example the mandrel 4 is travelling from right to left as indicated by the arrow. The mandrel 4 may pass through the braiding machine 24 repeatedly during the braiding process in order to build up layers of fibre tows 30.

In this example, only the outermost fibre tows 30 are shown. Therefore, in this simplified diagram, these fibre tows 30 also show the convergence surface 48.

However, it will be appreciated that any number of fibre tows 30 may be braided over the mandrel 4.

In this example, the fibre tows 30 are shown converging with the mandrel 4. It will be appreciated that any number of fibre tows 30 may converge at any point on the mandrel 4 to achieve a braided fibre structure. However, in all the examples of the present disclosure, none of the fibre tows 30 intersect with any of the vertices 10 of the conical parts 8a-b of the mandrel. This is due to the arrangement of the mandrel 4 and the braiding machine 24. For example, some or all of the following variables may be selected or controlled such that none of the fibre tows 30 intersect with any of the vertices 10 of the conical parts 8a-b of the mandrel: the height of the conical parts 8a, 8b of the mandrel 4; the slope of the mandrel surface; the radius of the mandrel 4; the angle between the axis 32 of the conical parts 8 and the axis 34 of the braiding machine 24 (or between the axis 32 of the conical parts 8 and the axis of the mandrel shaft 6a); the inner radius of the guide ring 38 of the braiding machine 24; the number of fibre carriers 28; the fibre angle; the angular incline and/or tilt of the mandrel 4 relative to the axis of the braiding machine 24 during the braiding process; and/or the angle of the fibre tows 30 to the axis 34 of the braiding machine 24.

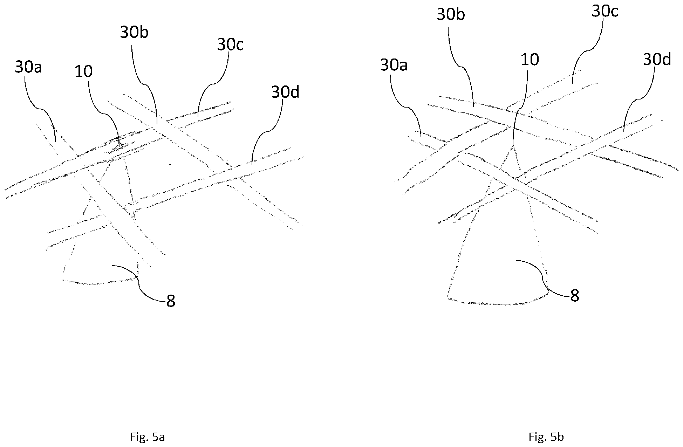

Figures 5a and 5b illustrate the braiding process as four fibre tows approach the vertex 10 of a conical part 8. In each of Figures 5a and 5b, four tows (two clockwise tows 30a, 30b and two anti-clockwise tows 30c, 30d) have been braided together and are approaching the mandrel 4. The four tows 30 are woven together to form a lattice with quadrilateral shaped gaps between them. As the braiding process progresses, the tows 30a-d cinch tighter together as they approach the mandrel 4 and the quadrilateral gaps get smaller until they are essentially closed as the fibre tows 30a-d reach the surface of the mandrel 4. However, where a conical part 8 is provided on the mandrel 4, this will disrupt the normal braiding process and the normal weave and will push the fibre tows 30 apart as they approach the mandrel 4, thereby creating a hole in the braided fibre structure on the mandrel 4.

Figure 5a illustrates what happens when one of the fibre tows 30 intersects with the vertex 10 of the conical part 8. The vertex 10 has contacted the middle of the tow 30, dividing it into two parts which will slide down opposite sides of the conical part 8. When such contact happens between a vertex 10 and a fibre tow 30, there is also a risk of fibres being broken, thereby weakening the structure. This situation is therefore to be avoided.

Figure 5b illustrates a better arrangement where the conical part 8 is aligned such that its vertex 10 does not intersect any of the fibre tows 30. Instead, the vertex 10 aligns with the quadrilateral shaped gap and the fibre tows 30 all descend around the conical part 8 without any individual tow 30 intersecting (contacting) the vertex 10. The tows 30 will of course contact the sloping side of the conical part 8 as they cinch together and they will slide down the steep side towards the mandrel base part 6 as described above, forming a hole around the base of the conical part 8. In this arrangement (Figure 5b) no fibre tows 30 are at risk of breaking by being pulled over the vertex 10.

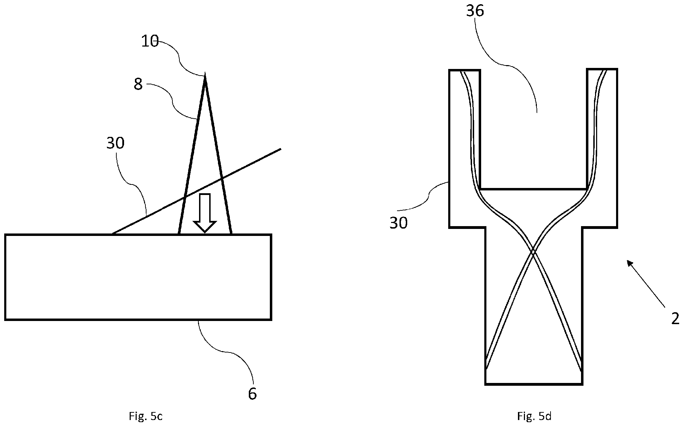

Figures 5c and 5d are schematic views illustrating a method of manufacturing a composite structure 2 according to an example of the present disclosure.

Figure 5c shows an example of a fibre tow 30 coming into contact with the conical part 8 of the mandrel (e.g. a side of the cone, not the vertex 10). This happens as the fibre tows 30a-30d cinch down around the sides of the conical part 8. The conical part 8 is configured such that the fibre tow 30 slips down to the base of the conical part 8. This may be achieved at least in part by minimising the vertex angle of the conical part 8 (i.e. maximising the slope of the conical part 8). This reduces the normal force on the fibre tow 30 from the surface of the cone, and allows the fibre tow 30 to slip towards the base of the cone by tension applied by the braiding machine 24. This may be advantageous because the fibre tows 30 do not need to be cut to form a hole 36 when the conical part 8 of the mandrel is removed. This may help to increase the strength and torque transmission of the composite structure 2.

Figure 5d is a schematic diagram of the finished part showing how some of the fibre tows 30 of the composite structure 2 have been diverted by the conical part 8. Figure 5d shows these tows 30 after the braiding process has been completed, resin applied and cured, and after the conical part 8 of the mandrel 4 has been removed. Fibre tows 30 that have come into contact with the conical part 8 of the mandrel 4 have slipped down to the base of the conical part 8, hence they are laid around the hole 36 formed by the conical part 8. These fibre tows 30 may continue to be braided across the rest of the mandrel 4 (e.g. in this example, the fibre tows 30 continue in a helical direction along the cylindrical part of the composite shaft). The tows 30 essentially continue along their original helical path after they have passed the hole 36, i.e. they have only deviated from that normal helical path in the vicinity of the hole 36. This would not be possible if the fibre tows 30 needed to be cut to form a hole 36.

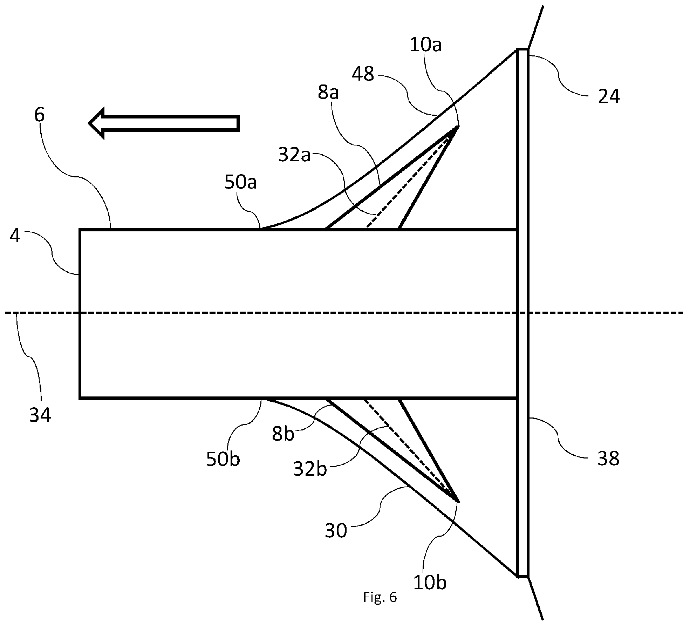

Figure 6 is a schematic view of a mandrel 4 and a braiding machine 24 according to an example of the present disclosure. The features of this embodiment are similar to those shown in Figure 4. However, in this embodiment, the axes 32a, 32b of the conical parts 8a, 8b are not substantially perpendicular to the longitudinal axis of the base part of the mandrel 6. In this example, the axes 32a, 32b of the conical parts are tilted with respect to the longitudinal axis of the base part of the mandrel 6. This may be advantageous as discussed below.

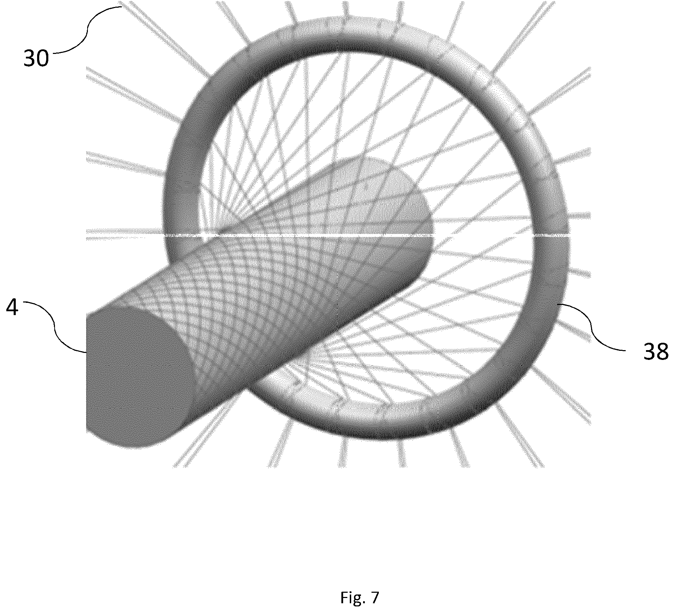

As explained in relation to Figures 5a and 5b, four fibre tows 30 are woven together to form a lattice with a quadrilateral shaped gap between them. The areas of these quadrilateral shaped gaps are related to their distance from the guide ring 38. This can be seen in Figure 7, which is a perspective view of a mandrel 4 and a braiding machine 24 (although for simplicity, the conical parts 8a, 8b have been omitted from this view). The quadrilateral shaped gaps have larger areas proximal to the guide ring 38. As the fibre tows 30 travel away from the guide ring 38, the area of the quadrilateral shaped gaps decrease, as the fibre tows 30 are pulled towards each other during the braiding process.

In the example of Figure 6, the vertices 10a, 10b of the conical parts 8a, 8b are tilted away from the bases of the cone, towards the guide ring 38. Therefore, the vertices 10a, 10b of the conical parts are configured to intersect the convergence surface 48 closer to the guide ring 38.

Each of the vertices 10a, 10b of the conical parts 8a, 8b may be arranged to intersect with one of the quadrilateral shaped gaps in the convergence surface 48. The conical parts 8a, 8b may be angled towards the guide ring 38 to match the path that each of the quadrilaterals would take as they progress towards the fell point 50a, 50b. Each of the quadrilaterals then essentially simply tightens around each of the conical parts 8a, 8b as they shrink until they are prevented from further shrinkage by the conical parts 8a, 8b. As the fibre tows 30 continue to progress towards the mandrel 4, the four fibre tows 30a-d making up each of the quadrilaterals will then by spread equally by each of the conical parts 8a, 8b, enlarging each of the quadrilaterals to make the desired holes.

Therefore, the arrangement illustrated in Figure 6, in which the conical parts 8a, 8b are tilted towards the guide ring 38 during braiding, may help to reduce deflection of the fibre tows 30 compared to an arrangement whereby the conical parts 8a, 8b are substantially perpendicular to the guide ring 38 during braiding.

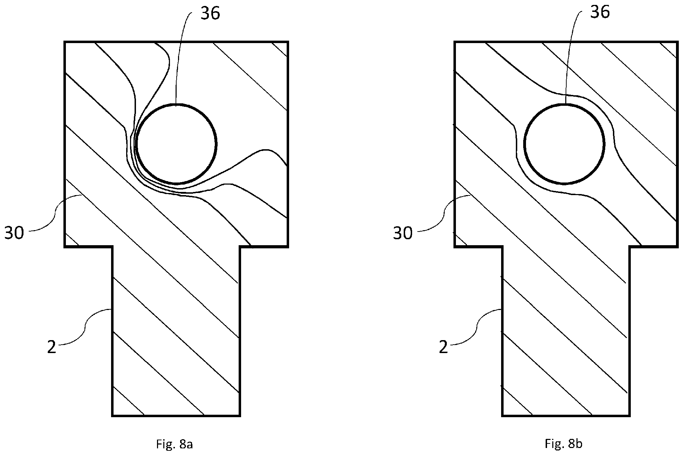

Figures 8a and 8b are schematic views of composite structures 2 according to examples of the present disclosure. The composite structures 2 shown in Figures 8a and 8b each comprise a hole 36, formed by a conical part 8a, 8b of the mandrel 4. For clarity, only clockwise fibres have been shown in Figures 8a and 8b. However, it will be appreciated that anticlockwise fibres would also be present in a composite structures according to examples of the present disclosure with an approximate mirror image structure.

In the example shown in Figure 8a, some of the fibre tows 30 have been displaced around the hole 36 by the conical part 8a, 8b. Therefore, the area above the hole 36 (which is on the side of the conical part 8a, 8b nearest to the guide ring 38) has a lower density of fibres than the rest of the composite shaft. This is referred to as a depletion zone. The depletion zone may have different material properties to the rest of the composite shaft, for example lower tensile strength. It will be appreciated that although only clockwise fibres are shown, anticlockwise fibres may also form a similar depletion zone when they are displaced around the hole 6 by the conical part 8a, 8b.

In the example shown in Figure 8b, the extent to which the fibre tows 30 have been displaced around the hole 36 is much lower. Although the fibre tows 30 curve around the perimeter of the hole 36, they have not been displaced from one side of the hole 36 to the other, as in Figure 8a. This means that there are no depletion zones around the hole 36. This may be advantageous because the material properties of the composite shaft are more uniform. Figure 8b shows what might result from a conical part 8a, 8b which is angled towards the guide ring as shown in Figure 6 at an optimal angle that follows the normal path of the quadrilateral shaped gap down onto the mandrel surface. With this arrangement, the quadrilateral shaped gap is merely spread in size to form a hole without being axially displaced relative to the rest of the fabric.

It will be appreciated that in some examples, it may be advantageous to achieve the fibre placement shown in Figure 8a. For example, in order to form a yoke, a cut is made in the composite structure which intersects at least one of the holes 36 formed by the conical part(s). One such example is shown in Figure 3c and discussed in the corresponding description. In some such examples, it may be advantageous to allow a depletion zone to be formed on the side of the composite structure that is to be cut away, because the corresponding area with an increased density of fibres remains in the composite structure. This area may have advantageous material properties, such as higher strength.

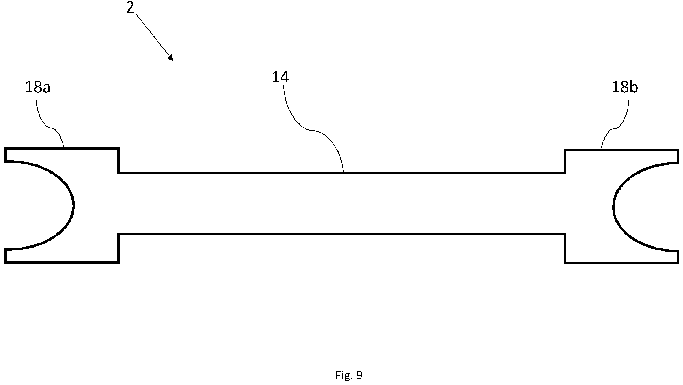

Figure 9 is a schematic view of a composite shaft with a yoke formed at each end according to an example of the present disclosure. In this example, the composite shaft comprises an elongate cylindrical part 14 with a yoke portion 18a, 18b at each end. The example shown in Figure 5 may be used as a drive shaft for example, with each yoke portion 18a, 18b forming part of a universal joint.

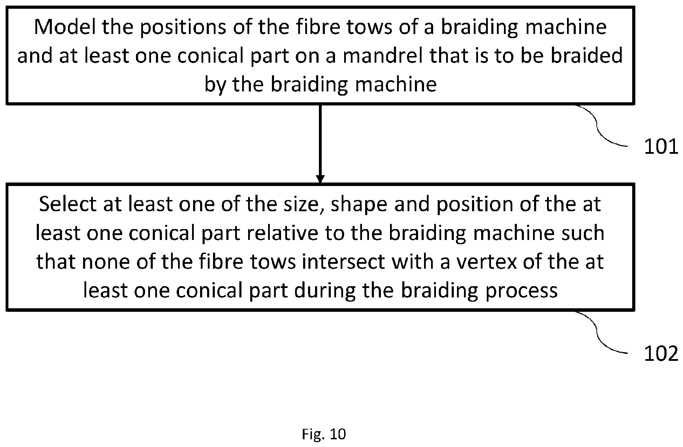

Figure 10 is a flow diagram showing a method of modelling a fibre braiding process according to an example of the present disclosure. The method shown in Figure 10 may be carried out on a computer comprising a processor. The method shown in Figure 10 may comprise computer software including instructions which, when executed on a processer, cause the processor to: model the positions of the fibre tows of a braiding machine and at least one conical part on a mandrel that is to be braided by the braiding machine (step 101); and select at least one of the size, shape and position of the at least one conical part relative to the braiding machine such that none of the fibre tows intersect with a vertex of the at least one conical part during the braiding process (step 102).

## Claims

1. A method of manufacturing a composite structure (2), the method comprising:
providing a mandrel (4) comprising a base part (6) and at least one conical part (8a-d);
wherein the base part (6) comprises an elongate shaft (6a) having a longitudinal axis;
wherein the base part (6) of the mandrel (4) comprises a cylindrical surface around the longitudinal axis; and
wherein the at least one conical part (8a-d) extends from the cylindrical surface of the base part (6); and
moving the mandrel (4) and a braiding machine (24) relative to one another such that fibre tows (30) are braided over at least the base part (6) of the mandrel (4);
**characterised in that**:
the mandrel (4) and the braiding machine (24) are arranged such that during the braiding process, none of the fibre tows (30) intersect with a vertex (10) of the at least one conical part (8a-d); and
wherein the method comprises:
modelling the positions of the fibre tows (30) and the at least one conical part (8a-d) during the braiding process; and
selecting at least one of the size, the shape and the position of the at least one conical part (8a-d) relative to the braiding machine (24) such that none of the fibre tows (30) intersect with a vertex (10) of the at least one conical part (8a-d) during the braiding process.

2. A method as claimed in claim 1, wherein the mandrel (4) is configured such that fibre tows (30) that come into contact with the at least one conical part (8a-d) of the mandrel (4) slip down to the base of the at least one conical part (8a-d).

3. A method as claimed in claim 1 or 2, wherein an axis of the at least one conical part (8a-d) is at a non-perpendicular angle to the longitudinal axis of the elongate shaft.

4. A method as claimed in claim 1, 2 or 3, wherein the modelling comprises computer simulation.

5. A method as claimed in any preceding claim, further comprises the steps of:
applying resin to the fibre tows (30);
curing the resin;
removing the at least one conical part (8a-d) of the mandrel (4); and
optionally removing the base part (6) of the mandrel (4).

6. A method as claimed in claim 5, further comprising steps of:
providing metallic inserts (12) at or around the base of the at least one conical part (8a-d); and
at least partially encasing the metallic inserts (12) in the resin.

7. A method as claimed in any preceding claim, wherein the mandrel (4) comprises at least one pair of conical parts (8a, 8b; 8c, 8d), the two conical parts (8a, 8b; 8c, 8d) of the pair extending from opposite sides of the base part (6).

8. A method as claimed in claim 7, wherein the method further comprises a step of cutting the composite structure (2) such that a part of the composite structure (2) forms a clevis with a pair of holes (36a, 36b; 36c, 36d) formed by the pair of conical parts (8a, 8b; 8c, 8d).

9. A method as claimed in any of claims 1 to 6, wherein the mandrel (4) comprises at least two pairs of conical parts (8a, 8b; 8c, 8d);
wherein each pair comprises two conical parts (8a, 8b; 8c, 8d) extending from opposite sides of the base part (6); and
wherein optionally the conical parts of one pair (8a, 8b) have a larger base than the conical parts of the other pair (8c, 8d).

10. A method as claimed in any of claims 7, 8 or 9, wherein the method further comprises a step of making one or more cuts through the composite structure (2);
wherein the one or more cuts intersect with the two holes (36a, 36b; 36c, 36d) created by one pair of conical parts (8a, 8b; 8c, 8d) to form a yoke structure (18) on an end of the composite structure (2).

11. A method as claimed in claim 10, wherein the yoke (18) comprises two arms (40) and wherein each arm (40) comprises a hole (36-d); and
wherein the hole (36a-d) in each arm (40) is formed by braiding fibre around at least one conical part (8a-d) of the mandrel (4).

12. A method of manufacturing a composite structure (2) as claimed in claim 10 or 11, wherein the yoke (18) is configured to form part of a universal joint;
wherein optionally the composite structure (2) comprises two end portions (18a, 18b); and
both end portions (18a, 18b) of the composite structure (2) may be configured to form part of a universal joint.

## Patentansprüche

1. Verfahren zur Herstellung einer Verbundstruktur (2), wobei das Verfahren umfasst:
Bereitstellen eines Dorns (4), welcher ein Basisteil (6) und mindestens ein konisches Teil (8a-d) umfasst;
wobei das Basisteil (6) eine längliche Welle (6a) mit einer Längsachse umfasst;
wobei das Basisteil (6) des Dorns (4) eine zylindrische Oberfläche um die Längsachse umfasst; und
wobei sich der mindestens eine konische Teil (8a-d) von der zylindrischen Oberfläche des Basisteils (6) erstreckt; und
Verschieben des Dorns (4) und einer Flechtmaschine (24) relativ zueinander, sodass Faserstränge (30) mindestens über das Basisteil (6) des Dorns (4) geflochten sind;
**dadurch gekennzeichnet, dass**:
der Dorn (4) und die Flechtmaschine (24) so angeordnet sind, dass während des Flechtvorgangs keiner der Faserstränge (30) einen Scheitelpunkt (10) des mindestens einen konischen Teils (8a-d) schneidet; und
wobei das Verfahren umfasst:
Modellieren der Positionen der Faserstränge (30) und des mindestens einen konischen Teils (8a-d) während des Flechtvorgangs; und
Auswählen mindestens eines von der Größe, der Form und der Lage des mindestens einen konischen Teils (8a-d) relativ zur Flechtmaschine (24) sodass sich während des Flechtvorgangs keiner der Faserstränge (30) mit einem Scheitelpunkt (10) des mindestens einen konischen Teils (8a-d) schneidet.

2. Verfahren nach Anspruch 1, wobei der Dorn (4) so ausgebildet ist, dass Faserstränge (30), welche mit dem mindestens einen konischen Teil (8a-d) des Dorns (4) in Berührung kommen, bis zum Boden des mindestens einen konischen Teils (8a-d) herunterrutschen.

3. Verfahren nach Anspruch 1 oder 2, wobei eine Achse des mindestens einen konischen Teils (8a-d) in einem nicht senkrechten Winkel zur Längsachse der länglichen Welle steht.

4. Verfahren nach Anspruch 1, 2 oder 3, wobei die Modellierung eine Computersimulation umfasst.

5. Verfahren nach einem der vorstehenden Ansprüche weiter folgende Schritte umfassend:
Auftragen von Harz auf die Faserstränge (30);
Aushärten des Harzes;
Entfernen des mindestens einen konischen Teils (8a-d) des Dorns (4); und
optional Entfernen des Basisteils (6) des Dorns (4).

6. Verfahren nach Anspruch 5, weiter folgende Schritte umfassend:
Bereitstellen metallischer Einsätze (12) am oder um den Boden des mindestens einen konischen Teils (8a-d); und
mindestens teilweises Umhüllen der metallischen Einsätze (12) in das Harz.

7. Verfahren nach einem der vorstehenden Ansprüche, wobei der Dorn (4) mindestens ein Paar konischer Teile (8a, 8b; 8c, 8d) umfasst, wobei sich die zwei konischen Teile (8a, 8b; 8c, 8d) des Paares von gegenüberliegenden Seiten des Basisteils (6) erstrecken.

8. Verfahren nach Anspruch 7, wobei das Verfahren weiter einen Schritt des Schneidens der Verbundstruktur (2) umfasst, sodass ein Teil der Verbundstruktur (2) einen Gabelkopf mit einem Paar von Löchern (36a, 36b; 36c, 36d) bildet, welche durch das Paar von konischen Teilen (8a, 8b; 8c, 8d) gebildet sind.

9. Verfahren nach einem der Ansprüche 1 bis 6, wobei der Dorn (4) mindestens zwei Paare konischer Teile (8a, 8b; 8c, 8d) umfasst;
wobei jedes Paar zwei konische Teile (8a, 8b; 8c, 8d) umfasst, welche sich von gegenüberliegenden Seiten des Basisteils (6) erstrecken; und
wobei optional die konischen Teile eines Paares (8a, 8b) eine größere Basis aufweisen als die konischen Teile des anderen Paares (8c, 8d).

10. Verfahren nach einem der Ansprüche 7, 8 oder 9, wobei das Verfahren weiter einen Schritt des Herstellens eines oder mehrerer Schnitte durch die Verbundstruktur (2) umfasst;
wobei sich die einen oder mehreren Schnitte mit den zwei Löchern (36a, 36b; 36c, 36d) schneiden, welche durch ein Paar konischer Teile (8a, 8b; 8c, 8d) geschaffen werden, um an einem Ende der Verbundstruktur (2) eine Gabelstruktur (18) zu bilden.

11. Verfahren nach Anspruch 10, wobei die Gabel (18) zwei Arme (40) umfasst und wobei jeder Arm (40) ein Loch (36-d) umfasst; und
wobei das Loch (36a-d) in jedem Arm (40) durch Flechten von Fasern um mindestens einen konischen Teil (8a-d) des Dorns (4) gebildet ist.

12. Verfahren zur Herstellung einer Verbundstruktur (2) nach Anspruch 10 oder 11, wobei die Gabel (18) so ausgebildet ist, dass sie Teil eines Kreuzgelenks ist;
wobei die Verbundstruktur (2) optional zwei Endabschnitte (18a, 18b) umfasst; und
beide Endabschnitte (18a, 18b) der Verbundstruktur (2) so ausgebildet sind, dass sie Teil eines Kreuzgelenks sind.

## Revendications

1. Procédé de fabrication d'une structure composite (2), le procédé comprenant :
la fourniture d'un mandrin (4) comprenant une partie de base (6) et au moins une partie conique (8a-d) ;
dans lequel la partie de base (6) comprend un arbre allongé (6a) ayant un axe longitudinal ;
dans lequel la partie de base (6) du mandrin (4) comprend une surface cylindrique autour de l'axe longitudinal ; et
dans lequel ladite au moins une partie conique (8a-d) s'étend à partir de la surface cylindrique de la partie de base (6) ; et
le déplacement du mandrin (4) et d'une machine à tresser (24) l'un par rapport à l'autre de sorte que des câbles de fibre (30) sont tressés sur au moins la partie de base (6) du mandrin (4) ;
**caractérisé en ce que** :
le mandrin (4) et la machine à tresser (24) sont agencés de sorte qu'au cours du processus de tressage, aucun des câbles de fibre (30) ne croise un sommet (10) de ladite au moins une partie conique (8a-d) ; et
dans lequel le procédé comprend :
la modélisation des positions des câbles de fibre (30) et de ladite au moins une partie conique (8a-d) pendant le processus de tressage ; et
la sélection d'au moins l'une parmi la taille, la forme et la position de ladite au moins une partie conique (8a-d) par rapport à la machine à tresser (24) de sorte qu'aucun des câbles de fibre (30) ne croise un sommet (10) de ladite au moins une partie conique (8a-d) pendant le processus de tressage.

2. Procédé selon la revendication 1, dans lequel le mandrin (4) est configuré de sorte que des câbles de fibre (30) qui entrent en contact avec ladite au moins une partie conique (8a-d) du mandrin (4) glissent vers le bas jusqu'à la base de ladite au moins une partie conique (8a-d).

3. Procédé selon la revendication 1 ou 2, dans lequel un axe de ladite au moins une partie conique (8a-d) se trouve à un angle non perpendiculaire à l'axe longitudinal de l'arbre allongé.

4. Procédé selon la revendication 1, 2 ou 3, dans lequel la modélisation comprend une simulation informatique.

5. Procédé selon l'une quelconque des revendications précédentes, comprenant en outre les étapes consistant à :
appliquer une résine sur les câbles de fibre (30) ;
durcir la résine ;
retirer ladite au moins une partie conique (8a-d) du mandrin (4) ; et
retirer facultativement la partie de base (6) du mandrin (4).

6. Procédé selon la revendication 5, comprenant en outre des étapes consistant à :
disposer des inserts métalliques (12) au niveau ou autour de la base de ladite au moins une partie conique (8a-d) ; et
encastrer au moins partiellement les inserts métalliques (12) dans la résine.

7. Procédé selon l'une quelconque des revendications précédentes, dans lequel le mandrin (4) comprend au moins une paire de parties coniques (8a, 8b ; 8c, 8d), les deux parties coniques (8a, 8b ; 8c, 8d) de la paire s'étendant depuis des côtés opposés de la partie de base (6).

8. Procédé selon la revendication 7, dans lequel le procédé comprend en outre une étape de découpe de la structure composite (2) de sorte qu'une partie de la structure composite (2) forme une manille avec une paire de trous (36a, 36b ; 36c, 36d) formés par la paire de parties coniques (8a, 8b ; 8c, 8d).

9. Procédé selon l'une quelconque des revendications 1 à 6, dans lequel le mandrin (4) comprend au moins deux paires de parties coniques (8a, 8b ; 8c, 8d) ;
dans lequel chaque paire comprend deux parties coniques (8a, 8b ; 8c, 8d) s'étendant depuis des côtés opposés de la partie de base (6) ; et
dans lequel les parties coniques d'une paire (8a, 8b) ont facultativement une base plus grande que les parties coniques de l'autre paire (8c, 8d).

10. Procédé selon l'une quelconque des revendications 7, 8 ou 9, dans lequel le procédé comprend en outre une étape de réalisation d'une ou plusieurs découpes à travers la structure composite (2) ;
dans lequel les une ou plusieurs découpes croisent les deux trous (36a, 36b ; 36c, 36d) créés par une paire de parties coniques (8a, 8b ; 8c, 8d) pour former une structure d'étrier (18) sur une extrémité de la structure composite (2).

11. Procédé selon la revendication 10, dans lequel l'étrier (18) comprend deux bras (40) et dans lequel chaque bras (40) comprend un trou (36-d) ; et
dans lequel le trou (36a-d) dans chaque bras (40) est formé par tressage d'une fibre autour d'au moins une partie conique (8a-d) du mandrin (4).

12. Procédé de fabrication d'une structure composite (2) selon la revendication 10 ou 11, dans lequel l'étrier (18) est configuré pour faire partie d'un joint universel ; dans lequel la structure composite (2) comprend facultativement deux portions d'extrémité (18a, 18b) ; et les deux portions d'extrémité (18a, 18b) de la structure composite (2) peuvent être configurées pour faire partie d'un joint universel.
